# EUROPÄISCHE PATENTSCHRIFT

(11) **EP 1 859 931 B1**
(45) Veröffentlichungstag und Bekanntmachung des Hinweises auf die Patenterteilung: **11.04.2012**
(21) Anmeldenummer: 06010948.5
(22) Anmeldetag: 26.05.2006
(51) Int. Cl.: B32B 17/10, B60J 7/043, B60J 1/00, B62D 25/06

(54) **Transparentes Verbundbauteil für ein Fahrzeug-Dachsystem**
Transparent composite component for a vehicle roof system
Élément composite transparent pour un système de toit de véhicule

(43) Veröffentlichungstag der Anmeldung: 28.11.2007
(73) Patentinhaber: Roof Systems Germany GmbH, 63128 Dietzenbach (DE)
(72) Erfinder: Grimm, Rainer, 60598 Frankfurt (DE); Röder, Joachim, 63165 Mühlheim (DE); Böhm, Horst, 60599 Frankfurt (DE)
(74) Vertreter: Prinz & Partner

(56) Entgegenhaltungen:
- EP-A2- 0 525 690
- WO-A1-2004/073976
- DE-A1- 2 230 331
- DE-A1- 3 227 647
- DE-A1- 4 227 400
- DE-C1- 19 723 596
- DE-U1- 29 518 081
- US-A- 2 298 874
- US-A- 4 004 388

## Beschreibung

Die Erfindung betrifft ein transparentes Verbundbauteil für ein Fahrzeug-Dachsystem.

Aus der DE 102004030086 ist ein Verbundbauteil bekannt, das eine erste und eine zweite Scheibe aufweist, die miteinander durch eine Kleberschicht verbunden sind.

Eine Anforderung an ein solches Verbundbauteil ist, daß im Falle einer Beschädigung gewährleistet ist, daß keine Splitter in den Innenraum des Fahrzeugs eindringen. Dies wird dadurch gewährleistet, daß die erste und die zweite Scheibe durch die Kleberschicht miteinander verbunden sind. Auf diese Weise ist ein eigenstabiles Gebilde geschaffen, von dem sich auch bei einer Beschädigung keine Splitter lösen können.

Eine weitere Anforderung an ein solches Verbundbauteil, wenn es beispielsweise als Deckel eines Schiebedachsystems eines Kraftfahrzeugs verwendet wird, besteht darin, bei einem geringen Gewicht eine hohe Festigkeit zu bieten. Zu diesem Zweck ist meist ein Versteifungsrahmen vorgesehen, der mit dem Deckel verbunden ist. Der Versteifungsrahmen dient dann dazu, den Deckel mit der Mechanik des Schiebedachsystems zu verbinden.

Aus der US-A-4004388 ist eine Verbundscheibe für ein Flugzeug bekannt, bei der die beiden Scheiben mittels Epoxidharz miteinander verklebt werden. Zwischen den beiden Scheiben sind Befestigungsstreifen aus Fiberglas eingebettet, mit denen die Verbundscheibe in einem Rahmen angebracht werden kann.

Aus der DE-A-2230331 ist eine Verbundglas-Windschutzscheibe bekannt, bei der zwischen den beiden Fensterscheiben eine Splitterschutzfolie angeordnet ist.

Aus der EP-A-0525690 ist ein Glaselement für eine Gebäudeverglasung bekannt, das aus zwei Einzelscheiben besteht. Diese können durch eine Polyurethan-Schicht miteinander verklebt sein. Zwischen den Einzelscheiben sind Halteelemente angeordnet, die aus Blechstreifen bestehen können.

Die Aufgabe der Erfindung besteht darin, ein Verbundbauteil zu schaffen, welches sowohl gewährleistet, daß im Falle einer Beschädigung keine Splitter in den Fahrzeuginnenraum eintreten können, und andererseits bei geringem Gewicht eine hohe Festigkeit aufweist.

Zur Lösung dieser Aufgabe ist ein Verbundbauteil mit den Merkmalen des Anspruchs 1 vorgesehen. Die Erfindung beruht auf der Erkenntnis, daß auf den Versteifungsrahmen verzichtet werden kann, wenn der zur Anbringung des Verbundbauteils notwendige Deckelhalter unmittelbar zwischen die erste und die zweite Scheibe eingeklebt bzw. eingeschäumt wird. Dies hat keine negativen Auswirkungen auf den Splitterschutz. Außerdem kann die notwendige Festigkeit des Verbundbauteils durch eine geeignete Formgebung gewährleistet werden.

Gemäß einer Ausführungsform ist vorgesehen, dass ein Dichtungsträger in die Kleberschicht eingebettet ist.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 eine schematische Draufsicht auf ein Fahrzeugdach mit zwei Verbundbauteilen;
- Figur 2 einen schematischen Schnitt entlang der Ebene II-II von Figur 1;
- Figur 3 einen schematischen Schnitt durch eine weitere Ausführungsform;
- Figur 4 in einem Schnitt eine weitere Ausführungsform; und
- Figur 5 in einem Schnitt eine wiederum weitere Ausführungsform.

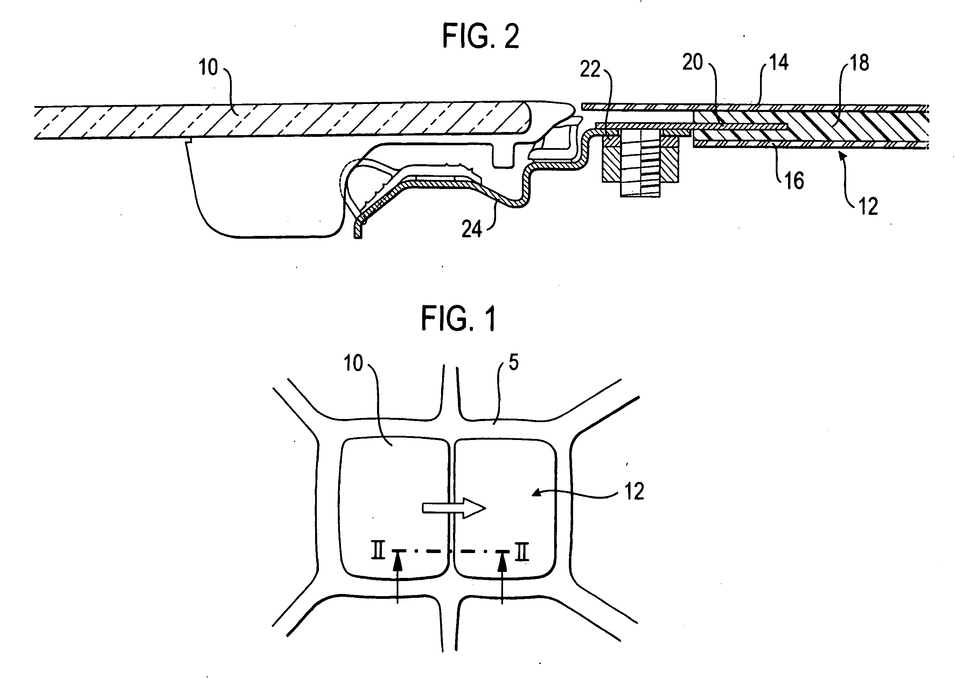

In Figur 1 ist schematisch in einer Draufsicht ein Fahrzeugdach 5 gezeigt, welches hier mit einem Panoramadach versehen ist. Dieses besteht aus einem nach hinten verschiebbaren Deckel 10 und einem fest angebrachten Scheibenelement 12. Sowohl der Deckel 10 als auch das Scheibenelement 12 sind durchsichtig.

Wie in Figur 2 zu sehen ist, setzt sich das Scheibenelement 12 aus einer ersten Scheibe 14 und einer zweiten Scheibe 16 zusammen, die beide aus Glas bestehen. Es kann sowohl Floatglas als auch Einscheibensicherheitsglas verwendet werden. Alternativ können Scheiben aus Kunststoff verwendet werden.

Zwischen den beiden Scheiben 14, 16 ist eine Kleberschicht 18 aus einem Schäummaterial vorgesehen. Es handelt sich hierbei um PU-Schaum. In den Randbereich der Kleberschicht 18 ist ein Trägerteil 20 eingeschäumt, welches zum einen zur Befestigung des Scheibenelements 12 an einem Halteholm 22 dient und zum anderen die Anbringung eines mit einer Wasserrinne versehenen Dichtungsträgers 24 ermöglicht.

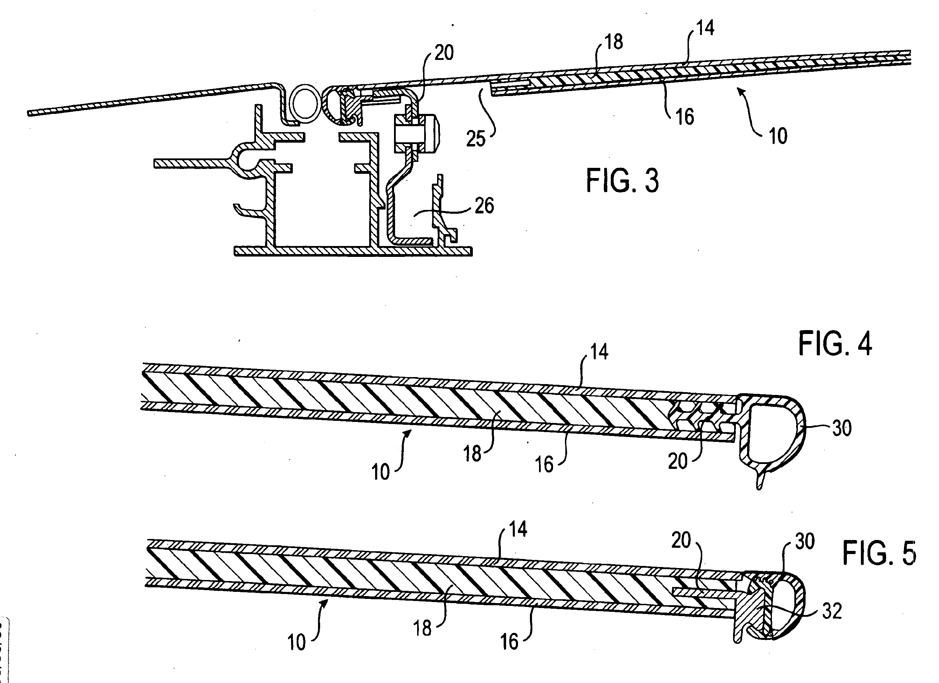

In Figur 3 ist eine weitere Ausführungsform gezeigt. Im Unterschied zur aus Figur 2 bekannten Ausführungsform ist das Verbundbauteil hier ein Deckel 10, der aus zwei Scheiben 14, 16 und einer Kleberschicht 18 aus einem Schäummaterial besteht. Auch hier ist ein Trägerteil 20 eingeschäumt. Im Bereich des Trägerteils 20 ist eine Aussparung 25 in der unteren Scheiben 16 und in der Kleberschicht 18 vorgesehen. Das Trägerteil erstreckt sich bis beiderseits der Aussparung. Mittig ist eine Lasche nach unten ausgebogen, die dazu dient, den Deckel 10 mit einem schematisch angedeuteten Schiebedachsystem 26 zu verbinden.

In Figur 4 ist im Schnitt ein Randbereich eines Deckels 10 gezeigt. Das Trägerteil 20 ist hier ein einstückig mit einer Dichtung 30 ausgebildeter Verankerungsfortsatz, der in die Kleberschicht 18 aus dem PU-Schaum eingeschäumt ist.

In Figur 5 ist ähnlich Figur 4 ein Randbereich eines Deckels 10 gezeigt. Das Trägerteil 20 ist hier einstückig mit einem Dichtungsträger 32 ausgeführt und wiederum in die Kleberschicht 18 eingeschäumt.

Allen Ausführungsformen ist gemeinsam, daß das Trägerteil 20 mit minimalem Aufwand fest mit dem Verbundbauteil verbunden ist. Es ist nicht erforderlich, das Trägerteil nachträglich an beispielsweise einem Verstärkungsrahmen anzuschrauben. Statt dessen wird das Trägerteil 20 bei der Herstellung des Verbundbauteils unmittelbar zwischen die beiden Scheiben 14, 16 eingeschäumt.

Durch geeignete Formgebung der Scheiben 14, 16 und damit auch der Kleberschicht 18 aus dem PU-Schaum kann die notwendige Steifigkeit des Verbundbauteils erzielt werden.

### Bezugszeichenliste

- 5: Fahrzeugdach
- 10: Deckel
- 12: Scheibenelement
- 14: erste Scheibe
- 16: zweite Scheibe
- 18: Kleberschicht
- 20: Trägerteil
- 22: Halteholm
- 24: Wasserrinne
- 25: Aussparung
- 26: Schiebedachsystem
- 30: Dichtung
- 32: Dichtungsträger

## Patentansprüche

1. Transparentes Verbundbauteil (10, 12) für ein Fahrzeug-Dachsystem, mit einer ersten und einer zweiten Scheibe (14, 16), die miteinander durch eine Kleberschicht (18) verbunden sind, die aus einem Schäummaterial besteht, und einem Deckelhalter (20), der in Kleberschicht (18) eingebettet ist.

2. Verbundbauteil nach Anspruch 1, **dadurch gekennzeichnet, daß** die Scheibe (14, 16) aus Glas besteht.

3. Verbundbauteil nach Anspruch 1, **dadurch gekennzeichnet, daß** die Kleberschicht (18) aus einem PU-Schaum besteht.

4. Verbundbauteil nach einem der vorhergehenden Ansprüche, **dadurch gekennzeichnet, daß** die Kleberschicht (18) transparent ist.

5. Verbundbauteil nach einem der Ansprüche 1 bis 4, **dadurch gekennzeichnet, daß** ein Dichtungsträger in die Kleberschicht eingebettet ist.

6. Verbundbauteil nach einem der vorhergehenden Ansprüche, **dadurch gekennzeichnet, daß** die Scheiben (14, 16) gekrümmt sind, so daß die Steifigkeit des Verbundbauteils erhöht ist.

## Claims

1. A transparent sandwich component (10, 12) for a vehicle roof system, comprising first and second panes (14, 16) which are connected with each other by an adhesive layer (18) consisting of an expandable material, and a cover holder (20) that is embedded in the adhesive layer (18).

2. The sandwich component according to claim 1, **characterized in that** the pane (14, 16) is made of glass.

3. The sandwich component according to claim 1, **characterized in that** the adhesive layer (18) consists of a PU foam.

4. The sandwich component according to any of the preceding claims, **characterized in that** the adhesive layer (18) is transparent.

5. The sandwich component according to any of claims 1 to 4, **characterized in that** a seal carrier is embedded in the adhesive layer.

6. The sandwich component according to any of the preceding claims, **characterized in that** the panes (14, 16) are curved so that the stiffness of the sandwich component is increased.

## Revendications

1. Elément composite transparent (10, 12) pour un système de toit de véhicule, comportant une première et une deuxième vitre (14, 16) reliées l'une à l'autre par une couche de colle (18) composée d'une matière de moussage, et un support de couvercle (20) inséré dans la couche de colle (18).

2. Elément composite selon la revendication 1, **caractérisé en ce que** la vitre (14, 16) est en verre.

3. Elément composite selon la revendication 1, **caractérisé en ce que** la couche de colle (18) est composée d'une mousse de polyuréthane.

4. Elément composite selon l'une des revendications précédentes, **caractérisé en ce que** la couche de colle (18) est transparente.

5. Elément composite selon l'une des revendications 1 à 4, **caractérisé en ce qu'**un support de joint est inséré dans la couche de colle.

6. Elément composite selon l'une des revendications précédentes, **caractérisé en ce que** les vitres (14, 16) sont arquées de sorte que la rigidité de l'élément composite est augmentée.
